# EUROPÄISCHE PATENTSCHRIFT

(11) **EP 0 984 537 B1**
(45) Veröffentlichungstag und Bekanntmachung des Hinweises auf die Patenterteilung: **21.12.2005**
(21) Anmeldenummer: 99113762.1
(22) Anmeldetag: 14.07.1999
(51) Int. Cl.: H02B 1/052

(54) **Schnellbefestigungsvorrichtung für ein elektrisches Installationsgerät zum Aufschnappen auf eine Hutprofiltragschiene**
Quick mounting system for an electrical apparatus by snapping on a DIN rail
Système de montage rapide d'un appareil électrique par encliquetage sur un rail DIN

(30) Priorität: 14.08.1998 DE 19836890
(43) Veröffentlichungstag der Anmeldung: 08.03.2000
(73) Patentinhaber: ABB PATENT GmbH, 68526 Ladenburg (DE)
(72) Erfinder: Goehle, Rolf, Dipl.-Ing., 69181 Leimen (DE); Schmitt, Volker, 69245 Bammental (DE); Weber, Ralf, Dipl.-Ing., 69123 Heidelberg (DE); Eppe, Klaus Peter, Dipl.-Ing., 69429 Waldbrunn (DE)
(74) Vertreter: Miller, Toivo

(56) Entgegenhaltungen:
- EP-A- 0 359 677
- EP-A- 0 680 114

## Beschreibung

Die Erfindung betrifft eine Schnellbefestigungsvorrichtung nach dem Oberbegriff des Anspruches 1.

In einer elektrischen Anlage, beispielsweise in einer Hausinstallationsanlage, werden elektrische Installationsgeräte auf Tragschienen befestigt, die ein Hutprofil besitzen. Zur Fixierung besitzt das Installationsgerät an seiner Befestigungsfläche eine Ausnehmung oder Vertiefung, die eine feststehende Nase und eine bewegbare Nase aufweist, wobei die bewegbare Nase federnd ins Innere der Ausnehmung auf die feststehende Nase zu gedrückt ist. Zur Fixierung des Installationsgerätes wird die feststehende Nase hinter eine Kante der Hutprofiltragschiene eingehängt und dann das Installationsgerät durch Verschwenken um diese Kante und Eindrücken des Installationsgerätes auf die Hutprofiltragschiene verrastet, wobei die bewegbare Nase von der anderen Kante der Hutprofiltragschiene federnd verschoben wird; nach dem Aufrasten drückt die Feder gegen die Hutprofilschiene und hält das Installationsgerät auf diese Weise fest.

Es gibt eine große Vielzahl von Schnellbefestigungsvorrichtungen, siehe zum Beispiel EP-A-0 680 114 und EP-A-0 373 627, bei den meisten ist die bewegbare Nase an einem Schieber angeformt, der senkrecht zur Hutprofilschiene von einer Feder nach innen in die Ausnehmung gedrückt ist. Wenn der Schieber aus Metall besteht, dann kann die Feder eine Schraubendruckfeder sein; es gibt Federanordnungen, bei denen eine Drahtbiegefeder vorgesehen ist, mit der der Schieber gegen die Hutprofiltragschiene gedrückt wird.

Wenn auf der Zugangsseite der Installationsgeräte, beispielsweise der Leitungsschutzschalter, eine sog. Querverdrahtung in Form einer Sammelschiene oder in Form von mehrphasigen Sammelschienenblocks angeschlossen ist, dann besteht das Problem, daß bei den meisten bekannten Schnellbefestigungsvorrichtungen für die Demontage eines Installationsgerätes innerhalb einer Installationsanlage die Querverdrahtung entfernt werden muß. Zu diesem Zwecke sind Schieber bekannt geworden, die ein Verschieben des Installationsgerätes auf der Hutprofiltragschiene gestatten, soweit, daß das Installationsgerät von der Anschlußfahne an der Querverdrahtung bzw. der Sammelschiene freikommt und senkrecht zur Hutprofilschiene abgehoben werden kann.

Aufgabe der Erfindung ist es, eine Schnellbefestigungsvorrichtung der eingangs genannten Art zu schaffen, bei der eine Demontage und eine Montage des Installationsgerätes bei vorhandener Querverdrahtung auch ohne Werkzeuge ermöglicht ist, wobei eine sichere und einfache Handhabung der Schnellbefestigung ermöglicht ist.

Diese Aufgabe wird erfindungsgemäß gelöst durch die Merkmale des Anspruches 1.

Erfindungsgemäß also soll der aus federndem Material bestehende Schieber zwei parallele Außenarme mit senkrecht zum Schieber vorspringenden Außennasen und einen dazwischen liegenden, federnden Zwischenarm mit einer ebenfalls senkrecht zum Schieber vorspringenden Zwischennase aufweisen, dessen Nasenfläche im entspannten Zustand von der durch die Außenarme aufgespannten Ebene einen geringeren Abstand als die Nasenflächen der Außennasen einnimmt, so daß die Zwischennase im montierten Zustand die Halterung an der Hutprofilschiene übernimmt.

Damit ist zur Demontage ein Anheben des Installationsgeräfes möglich, wobei die federnde Zwischennase ein Anheben gestattet bis zu den Nasenflächen der beiden Außennasen, wodurch die Demontage durch Verschieben des Installationsgerätes ohne Werkzeug ermöglicht wird.

Damit der Schieber bzw. das Installationsgerät bezogen auf den Schieber in zwei unterschiedlichen Stellungen verrastbar ist, sind an den Außenkanten der Außenarme senkrecht dazu in entgegengesetzte Richtung vorspringende Noppen vorgesehen, die in entsprechende Vertiefungen an in den Schieber führenden Rillen eingreifen.

Dabei kann jede Rille zwei Vertiefungen aufweisen, so daß der Schieber in zwei Stellungen fixiert ist, nämlich der Aufschnapp-Verrastungsstellung und der Stellung, in der der Schieber soweit nach außen gezogen ist, daß ein Abheben des Installationsgerätes auch bei eingebauter Querverdrahtung mittels Sammelschienen ermöglicht ist.

Gemäß einer weiteren Ausgestaltung der Erfindung kann an der dem Installationsgehäuseboden zugewandten Ende eine sägezahnartige Nase angeformt sein, die in eine Einsenkung am Gehäuseboden eingreift. Diese verhindert eine versehentliche Demontage des Schaltgerätes und ein versehentliches Herausziehen des Schiebers aus der inneren in die äußere Stellung.

Gemäß einer weiteren Ausgestaltung der Erfindung kann der Abstand der Nasenflächen der Außenarme von der Hutprofiltragschiene so bemessen sein, daß die außerhalb der Ausnehmung befindliche Bodenfläche des Installationsgehäuses frei von der Hutprofiltragschiene kommt, wenn das Installationsgerät von der Hutprofiltragschiene auf der Schieberseite angehoben und um die Hutprofilschienenkante an der anderen, feststehenden Nase geschwenkt wird.

Dadurch ist es möglich, mittels der Hutprofiltragschiene den Schieber so ortsfest zu halten, daß das Installationsgerät parallel zu der Hutprofilschienenebene und quer zur Hutprofiltragschiene verschoben werden kann, so daß die benachbarte Anschlußklemme, an der die Querverdrahtung angeschlossen ist, von den Anschlußfahnen der Querverdrahtung freikommt, so daß das Installationsgerät mit dem vollständig herausgezogenen Schieber, der sich hier in der zweiten äußeren Stellung befindet, aus dem Zwischenraum zwischen der Hutprofiltragschiene und der Querverdrahtung oder Sammelschiene oder dem Sammelschienenblock herausgezogen werden kann.

Die Montage der Anordnung verläuft genau umgekehrt: Man schiebt den ganz herausgezogenen Schieber zwischen die Querverdrahtung und die Hutprofiltragschiene und verschwenkt das Installationsgerät etwa mit der Bodenfläche oder Befestigungsfläche parallel zur Hutprofilschienenebene und verschiebt das Installationsgerät gegen die Querverdrahtung, so daß der Schieber in die innere erste Stellung verschoben wird.

Von Bedeutung ist dabei folgendes:
Wenn an das Installationsgerät eine Querverdrahtung in einem Isolationsgehäuse angeschlossen ist, ist am Isolationsgehäuse erfindungsgemäß auf der dem Installationsgerät zugewandten Seite eine Leiste angeordnet, die den die Schmalseitenfläche des Installationsgerätes überrragenden Bereich des Schiebers überdeckt, so daß dieser bei der Demontage niedergehalten ist, so daß der sägezahnartige Vorsprung von der Einsenkung freikommt und das Installationsgerät demontiert werden kann.

Weitere Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine perspektivische Ansicht auf einen Schieber,
- Fig. 2 bis 5: unterschiedliche Stellungen bei der Demontage eines Installationsgerätes mit vorhandener Querverdrahtung.

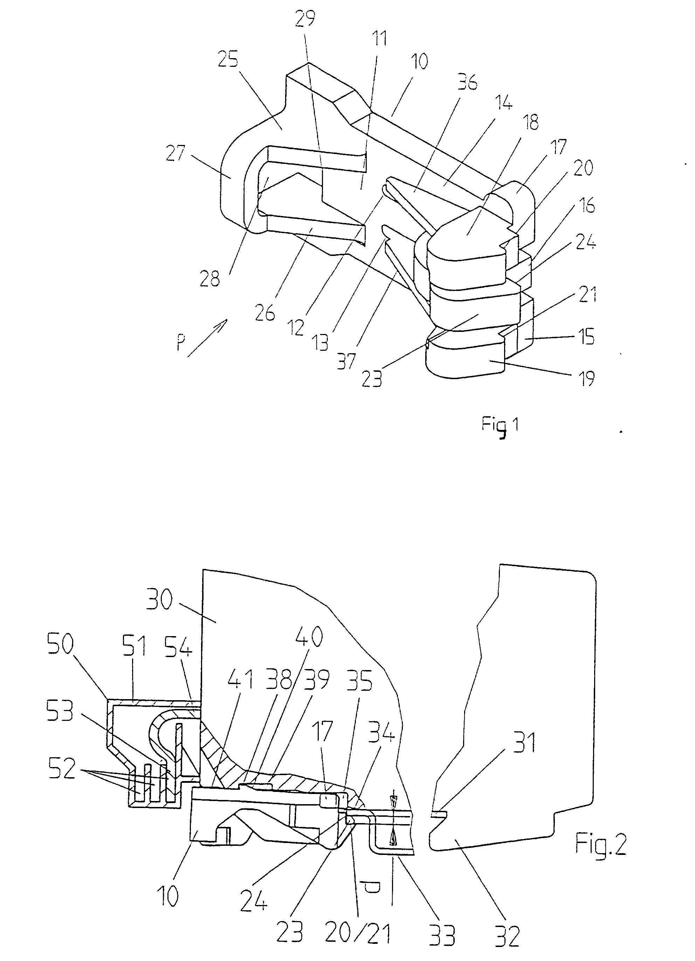

Die Fig. 1 zeigt einen Schieber 10 in perspektivischer Darstellung, der in ein Installationsgerät auf weiter unten dargestellte Weise eingesetzt wird. Der Schieber besitzt eine Grundplatte 11, in der Schlitze 12 und 13 vorgesehen sind, wodurch drei nebeneinander liegende federnde Arme gebildet sind, nämlich zwei Außenarme 14 und 15 und ein Innen- oder Zwischenarm 16. An den Außenarmen 14 und 15, d. h. an den Längskanten, sind Noppen 17 vorgesehen (die am Außenarm 15 vorgesehene Noppe ist nicht sichtbar). Senkrecht zu der Ebene der Grundplatte 11 sind an den Außenarmen 14 und 15 Außennasen 18 und 19 angeformt, die jeweils eine Nasenfläche 20 und 21 besitzen. Am Zwischenarm 16 ist eine Zwischennase 23 angeformt, deren Nasenfläche die Bezugsziffer 24 besitzt. Die Nasenflächen 20, 21 und 24 verlaufen parallel zur Grundplatte bzw. parallel zu den Armen 14, 15 und 16 und sind, wie aus Fig. 2 näher ersichtlich ist, in Abstand zueinander angeordnet, wenn die Arme 14, 15 und 16 in entspannter Stellung sind.

An dem den Nasen 18, 19 und 23 entgegengesetzten Ende der Grundplatte 11 sind senkrecht zur Grundplatte in die gleiche Richtung wie die Nasen 18, 19, 23 vorspringende Wandanformungen 25 und 26 vorgesehen, die mittels einer Verbindung 27 Verbindungssteg 27 verbunden sind, so daß hierdurch eine Öffnung 28 gebildet ist, in die ein Werkzeug zum Verschieben des Schiebers am Installationsgerät einsteckbar ist. Die im Bereich der Wandanformungen 25 und 26 befindliche Endkante 29 besitzt von der Projektion der den Nasen zugewandten Kante der Verbindung 27 einen Abstand, so daß in der Projektion, also in Pfeilrichtung P gesehen, zwischen der Verbindung 27 und der Endkante 29 ein Schlitz gebildet ist. Der Schieber 10 ist an der Bodenfläche eines Installationsgerätes 30 angeordnet, welches eine Ausnehmung 31 aufweist, an deren einem Ende bzw. an deren einen Wand eine feststehende Nase 32 angeordnet ist. Der Schieber 10 bildet dann die sog. bewegliche Nase, wobei die bewegliche Nase und die feststehende Nase hinter die Längskanten einer Hutprofiltragschiene 33 gerastet werden können.

Aus der Fig. 2 ist ersichtlich, daß die Nasenflächen 20 und 21 der Außennasen einen Abstand d von der den Nasenflächen 20/21 zugewandten Fläche des umgebogenen Schenkels 34 der Hutprofiltragschiene aufweisen; die Nasenfläche 24 der Zwischennase 23, die noch gerade sichtbar ist, legt sich auf die benachbarte Fläche des Schenkels 34 auf. Damit ist die Zwischennase 23 die eigentliche bewegbare Nase, die mit der feststehenden Nase 32 zusammenwirkt.

Die Längskanten der Basisplatte 11 des Schiebers 10 gleiten in Rillen 35 im Installationsgerät, wobei die Noppen 17 in entsprechende Vertiefungen in den Rillen 35 hineinschnappen können.

Aus der Fig. 1 ist ersichtlich, daß an die Außennasen 18 und 19 Verstärkungsrippen 36 und 37 anschließen, so daß die Arme 14 und 15 zwar aufeinanderzu gebogen werden können, nicht aber aus der Grundplattenebene herausbiegbar sind. Da der Zwischenarm 16 eine derartige Verstärkungsrippe nicht besitzt, kann der Zwischenarm 16 leicht auch aus der Ebene der Grundplatte 11 herausgebogen werden.

Auf der den Nasen abgewandten Fläche des Schiebers ist ein sägezahnartiger Vorsprung 38 angeformt, der in in eine Einsenkung 39 eingreift, so daß der sägezahnartige Vorsprung bei einer Bewegung des Schiebers 10 von der Hutprofiltragschiene 33 weg festgehalten wird; zur Montage des Schiebers 10 aber leicht in die beidseitigen Rillen 35 eingeschoben werden kann, was durch die Schrägfläche 40 am Vorsprung 38 sowie durch entsprechende Vertiefungsrillen bzw. Einführungsrillen 41 erleichtert wird.

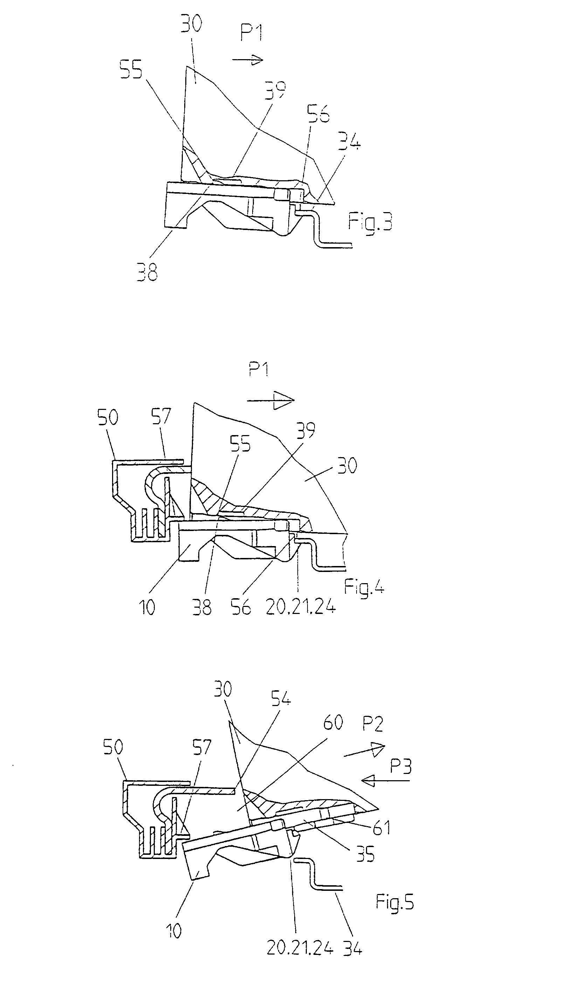

Das Installationsgerät 30 ist an eine Querverdrahtung 50 angeschlossen, die ein Isolationsgehäuse 51 mit Kammern 52 umfaßt, wobei in eine der Kammern 52 eine Sammelschiene 53 eingesetzt ist, an der eine Anschlußfahne 54 angeformt ist, die in eine nicht näher dargestellte Anschlußklemmenöffnung am Installationsschaltgerät 30 eingesetzt und darin festgeklemmt ist. Die Fig. 3 zeigt, wie der Vorsprung 38 in der Vertiefung 39 festgehalten wird, in dem die senkrecht verlaufende Fläche des Vorsprunges 38 gegen die Endwand 55 der Einsenkung 39 anschlägt.

Die Fig. 3 zeigt allerdings den Beginn der Demontage des Installationsgerätes. Das Installationsschaltgerät 30 ist im Bereich des Schiebers angehoben worden, so daß sich die Zwischennase 23 verbogen hat und die Zwischennasenfläche 24 aufgrund des Schenkels 34 mit den Außennasenflächen 20 und 21 fluchtet. Am Boden des Installationsschaltgerätes 30 ist ein beidseitig zu dem Schieber vorgesehener Gehäusevörsprung 56 angeformt, der in der Montagestellung gemäß Fig. 2 beim Verschieben des Installationsgerätes gegen die freie Längskante des Schenkels 34 der Hutprofilschiene 33 anschlägt, so daß eine unbeabsichtigte Demontage des Installationsschaltgerätes vermieden wird.
In der angehobenen Stellung, siehe Fig. 3, ist die freie Kante des Schenkels 34 frei von dem Vorsprung 56, so daß das Installationsgerät 30 nach rechts in Pfeilrichtung P₁ verschoben werden kann. Da der sägezahnartige Vorsprung 38 durch die Kante 55 der Einsenkung 39 am Weiterschieben gehindert ist, muß das hintere Ende des Schiebers 10 nieder gehalten werden, so daß der Vorsprung 38 frei von der Wand 55 der Einsenkung 39 kommt. Zwecks Niederhaltung befindet sich am Gehäuse 50 der Querverdrahtung eine Leiste 57, gegen die der Schieber 10 anschlägt, damit verbleibt der Schieber 10 der in Fig. 3 bzw. Fig. 4 gezeigten Stellung und das Installationsgerät kann nun in Pfeilrichtung P₁ weiter verschoben werden, bis der Schieber 10 praktisch vollständig aus dem Installationsgerät herausgeschoben ist. Zwischen dem Ende der Anschlußfahne 54 und der Längskante des Schenkels 34 befindet sich ein Zwischenraum 60, aus dem der Schieber 10 in Pfeilrichtung P₂ herausgezogen werden kann, ohne daß die Querverdrahtung mit dem Gehäuse 50 demontiert werden muß. In Fig. 5 erkennt man die eine Rille 35 sowie eine Vertiefung 61, in der die Noppen 17 in der zweiten, in Fig. 5 gezeigten Stellung einrasten können.

Zur Montage des Installationsschaltgerätes 30 geht man den umgekehrten Weg: man schiebt den herausgezogenen Schieber 10 durch den Zwischenraum 60 bis hinter die Leiste 57, schwenkt dann das Installationgsgerät 30 in Uhrzeigersinn, so daß die Nasen 20, 21, 24 hinter den Schenkel 34 schnappen können. Danach wird das Installationsgerät in Pfeilrichtung P₃ in die Stellung verschoben, die in der Fig. 2 dargestellt ist.

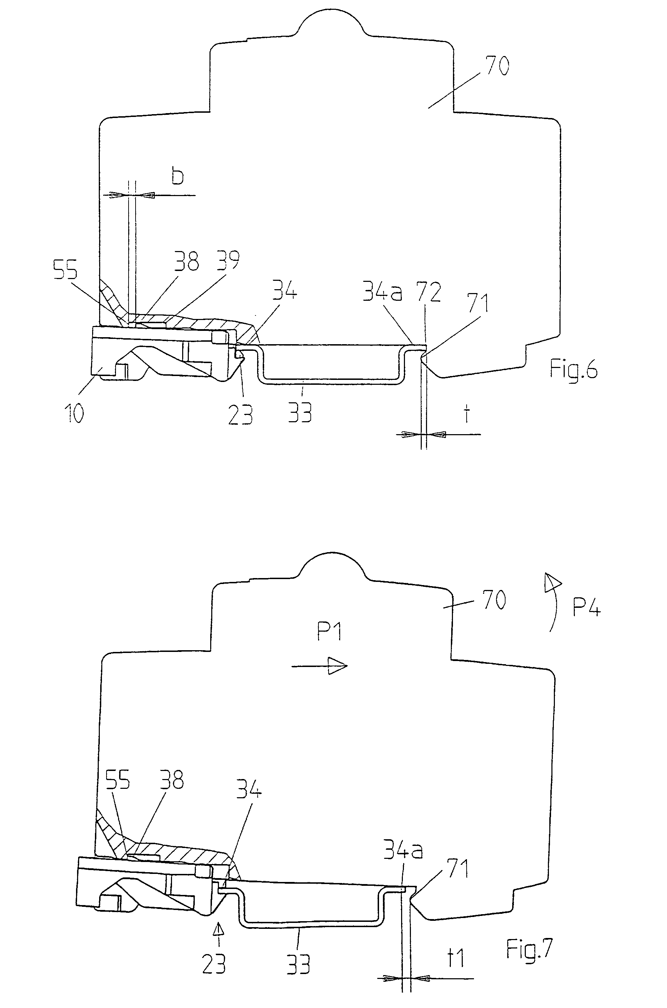

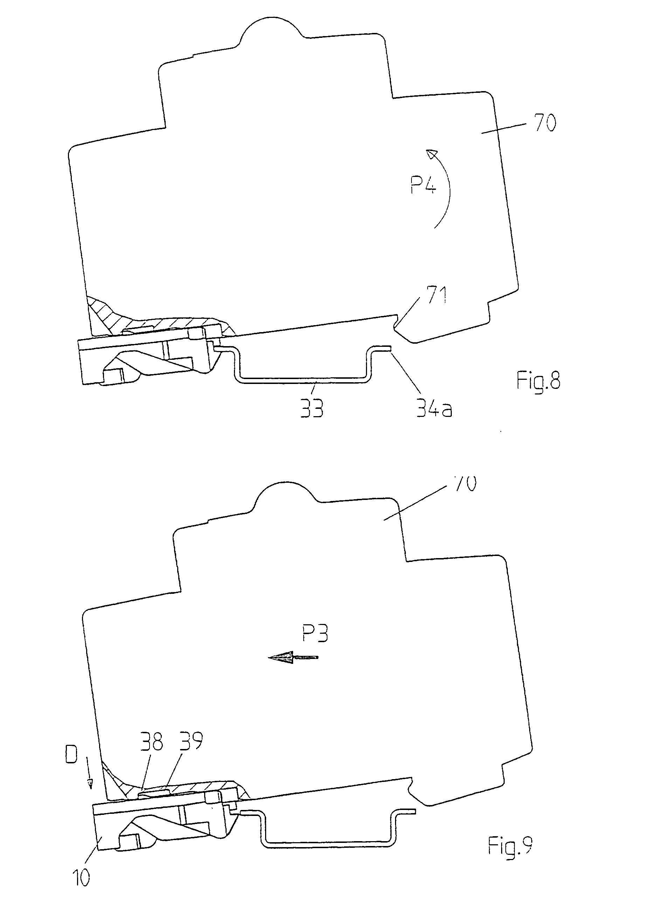

Wenn der sägezahnartige Vorsprung 38 wegfällt, was bei einer weiteren Ausgestaltung der Erfindung der Fall sein kann, dann muß das Installationsgerät nur angehoben werden, bis die benachbarte Kante der Hutprofilschiene 33 frei von dem Vorsprung 56 ist. Danach braucht das Installationsgerät 30 nur noch verschoben werden (in der Darstellung gemäß Fig. 3 bis 5 nach rechts), und das Installationsgerät 30 kann demontiert werden.
Bei einer weiteren Ausgestaltung der Erfindung (siehe Fig. 6 bis 9) wird die Schnellbefestigung auch dann einfach und ohne Werkzeug lösbar, so daß das Installationsgerät 70 einfach und ohne Werkzeug demontierbar ist. Am Installationsgerät ist der Schieber 10 vorgesehen, an dem der sägezahnartige Vorsprung 38 angeformt ist. In dem Zustand, in dem das Installationsgerät 70 auf der Hutprofiltragschiene 33 aufgeschnappt ist und der Schieber 10 aufgrund der Federwirkung (siehe weiter oben) gegen die Kante 34 der Hutprofiltragschiene 33 angedrückt wird, beträgt der Abstand des sägezahnartigen Vorsprunges 38 von der Wandung 55 der Vertiefung 39 die Größe b. Dabei besteht zwischen dem Ende der feststehenden Nase 71, die mit der beweglichen Nase 23 zusammenwirkt, und dem Grund 72 der Ausnehmung (ohne Bezugsziffer), die durch die feststehende Nase 71 gebildet wird, in die dann die der Kante 34 gegenüberliegende Kante 34a im montierten Zustand eingreift, der Abstand t. Mit anderen Worten: in diesem Falle übergreift die feststehende Nase 71 die Kante 34a um den Betrag t. Der Abstand mit dem Wert b ist größer als der Abstand mit dem Wert t, so daß dann, wenn das Installationsgerät 70 in Pfeilrichtung P₁ auf der Hutprofilschiene 33 verschoben wird und der Vorsprung 38 gegen die Wandung 55 anliegt, die feststehende Nase 71 frei von der Kante 34a wird, wobei zwischen der Kante 34 a und der feststehenden Nase 71 ein Abstand t₁ entsteht, so daß das Installationsgerät 70 um die Kante 34 im Bereich der bewegbaren Nase 23 entgegen dem Uhrzeiger P₄ verschwenkt werden kann, was in Fig. 8 zu sehen ist. Wenn nun die feststehende Nase 71 von der Kante 34a freigekommen ist, sich die Nase 71 also oberhalb der Kante 34a befindet, dann kann eine Demontage des Installationsgerätes 70 durch Verschieben des Installationsgerätes 70 in Pfeilrichtung P₃ erfolgen.

Bei der in den Fig. 6 bis 9 dargestellten Demontageart wäre eine Querverdrahtung zu demontieren, da das Verschieben in der letzten Phase in Pfeilrichtung P₃ in Richtung auf die Querverdrahtung erfolgen müßte. Andererseits wäre eine Demontage auch dann leicht möglich, wenn mittels eines Werkzeuges durch Druck D auf den Schieber 10 der sägezahnartige Vorsprung 38 aus der Vertiefung 39 herausgehoben würde; dann wäre der Schieber 10 soweit bezogen auf das Installationsgerät 70 verschiebbar, daß eine Demontage möglich ist, ähnlich wie in der Ausführung gemäß den Fig. 2 bis 5.

Nachzutragen ist noch, daß anstatt der Leiste 57 am Gehäuse 50 der Querverdrahtung auch ein Werkzeug verwendet werden kann, welches den Schieber 10 nach unten drückt, so daß der sägezahnartige Vorsprung 38 aus der Vertiefung 39 freikommen kann.

## Patentansprüche

1. Schnellbefestigungsvorrichtung für ein elektrisches Installationsgerät, insbesondere für einen Leitungsschutzschalter oder Fehlerstromschutzschalter, zum Aufschnappen auf eine Hutprofiltragschiene, mit einer an der Befestigungsseite des Installationsgerätes angeordneten Ausnehmung, an deren einer Wand eine feststehende und an deren anderer Wand eine an einem Schieber angeformte, federnd gegen die Hutprofiltragschiene gedrückte Nase angeordnet sind, die aufeinanderzu gerichtet sind, so daß sie nach dem Aufschnappen auf die Hutprofiltragschiene hinter die Längskanten greifen und das Installationsschaltgerät so festhalten, **dadurch gekennzeichnet, daß** der aus federndem Material bestehende Schieber (10) zwei parallele Außenarme (14, 15) mit senkrecht dazu vorspringenden Außennasen (18, 19) und einen dazwischen liegenden, federnden Zwischenarm (16) mit einer senkrecht dazu vorspringenden Zwischennase (23) aufweist, daß an den Außennasen (18, 19) und der Zwischennase (23) jeweils eine zum Boden des Installationsgerätes (30) parallele Nasenfläche (20, 21; 24) angeformt sind, wobei der Abstand der Nasenfläche (24) der Zwischennase von der durch die Außenarme (14, 15) aufgespannten Ebene einen geringeren Abstand zum Boden des Installationsgerätes aufweist als die Nasenflächen (20, 21) der Außennasen (18, 19), so daß die Zwischennase (23) im montierten Zustand allein die Halterung an der Hutprofiltragschiene (33) übernimmt.

2. Schnellbefestigungsvorrichtung nach Anspruch 1, **dadurch gekennzeichnet, daß** der Schieber (10) an den Außenkanten der Außenarme (14, 15) in entgegengesetzte Richtung vorspringende Noppen (17) aufweist, die in entsprechende Vertiefungen (61) an in den Schieber (10) führenden Rillen (35) im Bodenbereich des Installationsgerätes (30) eingreifen.

3. Schnellbefestigungsvorrichtung nach Anspruch 1, **dadurch gekennzeichnet, daß** jede Rille (35) zwei Vertiefungen (61) aufweist, die in Abstand zueinander angeordnet sind, so daß der Schieber (10) in zwei Stellungen federnd fixiert ist, nämlich in der Aufschnapp-Verrastungsstellung (Fig. 2) und in der Stellung, in der der Schieber so weit nach außen gezogen ist, daß ein Abheben des Installationsgerätes auch bei eingebauter Querverdrahtung (50) mittels einer Sammelschiene (53) ermöglicht ist.

4. Schnellbefestigungsvorrichtung nach einem der vorherigen Ansprüche, **dadurch gekennzeichnet, daß** an der dem Installationsgehäuseboden zugewandten Fläche des Schiebers ein sägezahnartiger Vorsprung (38) angeformt ist, der in eine Einsenkung (39) am Gehäuseboden eingreift, wobei die Sägezahnform so gebildet ist, daß ein leichtes Einführen des Schiebers in die Montagestellung ermöglicht, aber ein unbeabsichtigtes Herausziehen des Schiebers aus dem Installationsgerät verhindert ist.

5. Schnellbefestigungsvorrichtung nach einem der vorherigen Ansprüche, **dadurch gekennzeichnet, daß** der Abstand (d) des sägezahnartigen Vorsprunges (38) von der von der Hutprofilschiene (33) abgewandten Wandung (55) mit dem Wert (b) größer ist als der Abstand der feststehenden Nase von der benachbarten Kante (34a) der Hutprofilschiene (33) im montierten Zustand des Installationsgerätes (70), wenn also die Kante (34a) hinter die feststehende Nase (71) greift, so daß beim Verschieben des Installationsgerätes dann, wenn der sägezahnartige Vorsprung (38) gegen die Wandung (55) der Vertiefung (39) anschlägt, sich die feststehende Nase (71) außerhalb der benachbarten Kante (34a) der Hutprofilschiene befindet, so daß das Installationsgerät (70) um die bewegbare Nase (23) zur Demontage verschwenkbar ist.

6. Schnellbefestigungsvorrichtung nach einem der vorherigen Ansprüche, **dadurch gekennzeichnet, daß** der Abstand (d) der Nasenflächen (20, 21) der Außenarme (14, 15) von der Hutprofilschiene (33) so bemessen ist, daß die außerhalb der Ausnehmung (31) befindliche Bodenfläche des Installationsgerätes (30) frei von der Hutprofilschiene (33) kommt, wenn das Installationsgerät (30) von der Hutprofiltragschiene auf der Schieberseite angehoben und um die Hutprofiltragschienenkante an der anderen, feststehenden Nase (32) geschwenkt wird.

7. Schnellbefestigungsvorrichtung nach einem der vorherigen Ansprüche, **dadurch gekennzeichnet, daß** die Arme (14, 15, 16) an einer Grundplatte (11) angeformt sind, deren entgegengesetzt liegende Kante (2) mit einer mit den Schenkeln (25, 26) an der Platte (11) angeformten U-förmigen Verbindung (27) einen Schlitz bildet, in den ein Werkzeug zum Herausziehen des Schiebers einsetzbar ist.

8. Schnellbefestigungsvorrichtung nach einem der vorherigen Ansprüche, **dadurch gekennzeichnet, daß** die Außenarme (14, 15) mittels Versteifungsrippen (36, 37) gegen Ausbiegung aus der Grundfläche des Schiebers, senkrecht dazu, versteift sind.

9. Schnellbefestigungsvorrichtung nach einem der vorhergehenden Ansprüche, bei der an das Installationsgerät (30) eine Querverdrahtung (50) in einem Isolationsgehäuse (51) angeschlossen ist, **dadurch gekennzeichnet, daß** am Isolationsgehäuse (51) auf der dem Installationsgerät (30) zugewandten Seite eine Leiste (57) angeordnet ist, die den die Schmalseitenfläche des Installationsgerätes (30) überragenden Bereich (hinteres Ende) des Schiebers überdeckt, so daß dieser bei der Demontage niedergehalten ist, so daß der sägezahnartige Vorsprung (38) von der Einsenkung (39) freikommt und das Installationsgerät demontiert werden kann.

## Claims

1. Quick-fitting apparatus for an electrical service device, in particular for a circuit breaker or a fault-current circuit breaker, to be snapped onto a top-hat mounting rail, having a cutout, which is arranged on the fitting side of the service device and on whose one wall is arranged a stationary tab and on whose other wall is arranged a tab, which is integrally formed on a slide and is pressed in a resilient manner against the top-hat mounting rail, said tabs being directed towards one another such that they engage behind the longitudinal edges and hold the service switching device in position once it has been snapped onto the top-hat mounting rail, **characterized in that** the slide (10), which is made from a resilient material, has two parallel outer arms (14, 15) having outer tabs (18, 19) projecting perpendicularly thereto and a resilient intermediate arm (16), which lies between said outer tabs (18, 19), having an intermediate tab (23), which projects perpendicularly to said intermediate arm (16), **in that** in each case a tab face (20, 21; 24), which is parallel to the base of the service device (30), is integrally formed on the outer tabs (18, 19) and the intermediate tab (23), the distance of the tab face (24) of the intermediate tab from the plane covered by the outer arms (14, 15) having a smaller distance from the base of the service device than the tab faces (20, 21) of the outer tabs (18, 19), with the result that the intermediate tab (23) in the mounted state on its own takes on the retaining function on the top-hat mounting rail (33).

2. Quick-fitting apparatus according to Claim, **characterized in that** the slide (10) has, at the outer edges of the outer arms (14, 15), knobs (17), which project in the opposite direction and engage in corresponding depressions (61) in grooves (35), which guide the slide (10), in the base region of the service device (30).

3. Quick-fitting apparatus according to Claim 1, **characterized in that** each groove (35) has two depressions (61), which are arranged at a distance from one another such that the slide (10) is fixed in a resilient manner in two positions, namely in the snap-on latching position (Figure 2) and in the position in which the slide is drawn so far outwards that it is possible for the service device to be lifted off even when cross-wiring (50) is installed by means of a busbar (53).

4. Quick-fitting apparatus according to one of the preceding claims, **characterized in that** a sawtooth-like projection (38), which engages in a notch (39) in the housing base, is integrally formed on that face of the slide which faces the installation housing base, the saw-tooth shape being formed such that it is possible to introduce the slide into the mounting position easily, but unintentional withdrawal of the slide from the service device is prevented.

5. Quick-fitting apparatus according to one of the preceding claims, **characterized in that** the distance (d) of the sawtooth-like projection (38) from the wall (55), which is remote from the top-hat rail (33), is greater, by the value (b), than the distance of the stationary tab from the adjacent edge (34a) of the top-hat rail (33) in the mounted state of the service device (70) if the edge (34a) engages behind the stationary tab (71) such that, if the service device is displaced when the sawtooth-like projection (38) abuts the wall (55) of the depression (39), the stationary tab (71) is located outside the adjacent edge (34a) of the top-hat rail such that the service device (70) can be pivoted about the movable tab (23) for dismantling purposes.

6. Quick-fitting apparatus according to one of the preceding claims, **characterized in that** the distance (d) of the tab faces (20, 21) of the outer arms (14, 15) from the top-hat rail (33) is dimensioned such that the base face, which is located outside the cutout (31), of the service device (30) comes free from the top-hat rail (33) if the service device (30) is lifted up from the top-hat mounting rail on the slide side and is pivoted about the top-hat mounting rail edge on the other, stationary tab (32).

7. Quick-fitting apparatus according to one of the preceding claims, **characterized in that** the arms (14, 15, 16) are integrally formed on a baseplate (11), whose oppositely lying edge (2), with a U-shaped connection (27) which is integrally formed with the limbs (25, 26) on the plate (11), forms a slot, into which a tool can be inserted for the purpose of withdrawing the slide.

8. Quick-fitting apparatus according to one of the preceding claims, **characterized in that** the outer arms (14, 15) are reinforced by means of reinforcing ribs (36, 37) to prevent them from bending out of the base face of the slide, perpendicularly thereto.

9. Quick-fitting apparatus according to one of the preceding claims, in which cross-wiring (50) in an insulating housing (51) is connected to the service device (30), **characterized in that** a strip (57) is arranged on the insulating housing (51) on the side facing the service device (30), said strip (57) covering that region (rear end) of the slide which protrudes beyond the narrow end face of the service device (30), with the result that said slide is held down during dismantling such that the sawtooth-like projection (38) comes free from the notch (39), and the service device can be dismantled.

## Revendications

1. Système de montage rapide pour un appareil électrique, en particulier pour un disjoncteur de protection de ligne ou un disjoncteur à courant de défaut, en vue de l'encliquetage sur un rail support en profilé en chapeau, comprenant un évidement qui est prévu sur le côté de fixation de l'appareil électrique et dont une paroi comporte un ergot fixe et l'autre paroi comporte un ergot aménagé sur un coulisseau et pressé de façon élastique contre le rail support en profilé en chapeau, les deux ergots étant orientés l'un en direction de l'autre, de sorte qu'après encliquetage sur le rail support en profilé en chapeau, ils s'engagent derrière les bords longitudinaux et maintiennent ainsi l'appareil électrique, **caractérisé par le fait que** le coulisseau (10), qui est constitué d'un matériau élastique, présente deux bras extérieurs (14, 15) parallèles, avec des ergots extérieurs (18, 19) faisant saillie perpendiculairement auxdits bras, et un bras intermédiaire (16) élastique situé entre les bras extérieurs et comportant un ergot intermédiaire (23) faisant saillie perpendiculairement audit bras, **par le fait que** les ergots extérieurs (18, 19) et l'ergot intermédiaire (23) comportent chacun une surface d'ergot (20, 21; 24) parallèle au fond de l'appareil électrique (30), la distance entre la surface d'ergot (24) de l'ergot intermédiaire et le plan défini par les bras extérieurs (14, 15) étant inférieure à celle entre les surfaces d'ergot (20, 21) des ergots extérieurs (18, 19) et ledit plan, de sorte qu'à l'état monté, l'ergot intermédiaire (23) assure seul le maintien sur le rail support en profilé en chapeau (33).

2. Système de montage rapide selon la revendication 1, **caractérisé par le fait que** sur les bords extérieurs des bras extérieurs (14, 15), le coulisseau (10) présente des bossages (17) qui font saillie dans des directions opposées et s'engagent dans des creux (61) adaptés, aménagés dans des rainures (35) guidant le coulisseau (10), dans la région du fond de l'appareil électrique (30).

3. Système de fixation rapide selon la revendication 1, **caractérisé par le fait que** chaque rainure (35) présente deux creux (61) qui sont disposés à distance l'un de l'autre, de sorte que le coulisseau (10) est bloqué de façon élastique dans deux positions, à savoir dans la position d'encliquetage-verrouillage (fig. 2) et dans la position dans laquelle le coulisseau est tiré vers l'extérieur de manière telle que l'appareil électrique puisse être soulevé, même en présence d'un câblage transversal (50) intégré sous forme de barre collectrice (53).

4. Système de fixation rapide selon une des revendications précédentes, **caractérisé par le fait que** sur la face du coulisseau tournée vers l'appareil électrique, il est prévu une saillie (38) en dent de scie, qui pénètre dans une échancrure (39) aménagée dans le fond du boîtier, la dent de scie étant formée de manière à permettre une insertion aisée du coulisseau dans la position de montage, tout en empêchant le retrait non intentionnel du coulisseau de l'appareil électrique.

5. Système de fixation rapide selon une des revendications précédentes, **caractérisé par le fait que** la distance (d) entre la saillie (38) en dent de scie et la paroi (55) éloignée du rail support en profilé en chapeau (33) a la valeur (b) et est supérieure à la distance entre l'ergot fixe et le bord (34a) adjacent du rail support en profilé en chapeau (33), lorsque l'appareil électrique (70) est monté, c'est-à-dire lorsque le bord (34a) s'engage derrière l'ergot (71) fixe, de sorte que lors du déplacement de l'appareil électrique, lorsque la saillie (38) en dent de scie bute contre la paroi (55) de l'échancrure (39), l'ergot (71) fixe se trouve à l'extérieur par rapport au bord (34a) voisin du rail support en profilé en chapeau, de sorte que l'appareil électrique (70) peut être pivoté autour de l'ergot (23) mobile, en vue du démontage.

6. Système de fixation rapide selon une des revendications précédentes, **caractérisé par le fait que** la distance (d) entre les surfaces d'ergot (20, 21) des bras extérieurs (14, 15) et le rail support en profilé en chapeau (33) est prévue telle que la surface de fond de l'appareil électrique (30) située à l'extérieur de l'évidement (31) se dégage du rail support en profilé en chapeau (33) lorsque l'appareil électrique est soulevé du rail, côté coulisseau, et pivoté autour du bord du rail, au niveau de l'autre ergot (32) fixe.

7. Système de fixation rapide selon une des revendications précédentes, **caractérisé par le fait que** les bras (14, 15, 16) sont formés dans une plaque de base (11) dont le bord (29) opposé forme, avec une barrette de liaison (27) en forme de U réalisée d'une seule pièce avec les branches (25, 26) sur la plaque (11), une fente dans laquelle peut être inséré un outil destiné à extraire le coulisseau.

8. Système de fixation rapide selon une des revendications précédentes, **caractérisé par le fait que** les bras extérieurs (14, 15) sont rigidifiés à l'aide de nervures de renfort (36, 37) pour empêcher qu'ils ne fléchissent par rapport à la surface de base du coulisseau, perpendiculairement à celle-ci.

9. Système de fixation rapide selon une des revendications précédentes, dans lequel un câblage transversal (50), logé dans un boîtier isolant (51), est connecté à l'appareil électrique (30), **caractérisé par le fait que** sur son côté tourné vers l'appareil électrique (30), le boîtier isolant (51) comporte une baguette (57) qui recouvre la partie (extrémité arrière) du coulisseau dépassant par rapport à la surface du côté étroit de l'appareil électrique (30), de sorte que lors du démontage, le coulisseau est pressé vers le bas, permettant ainsi à la saillie (38) en dent de scie de se dégager de l'échancrure (39) et de démonter l'appareil électrique.
